# EUROPEAN PATENT APPLICATION

(11) **EP 4 819 538 A1**
(43) Date of publication of application: **07.10.2026**
(21) Application number: 25305498.5
(22) Date of filing: 04.04.2025
(51) Int. Cl.: H04L 9/32, H04L 9/40, H04L 9/00

(54) **PRIVACY-PRESERVING BIOMETRICS MATCHING**

(71) Applicant: THALES DIS FRANCE SAS, 92190 Meudon (FR)
(72) Inventor: DURAND, Stéphane, 78140 Vélizy Villacoublay (FR); COGLIATI, Benoît-Michel, 57100 Thionville (FR)
(74) Representative: Quintero Romero, Manuel

(57) **Abstract**

The invention provides a method for a personal device to delegate biometrics matching to a remote device in a privacy-preserving manner, the method comprising the steps of:
• sending, by the personal device, biometrics matching request to the remote device, the request at least comprising request data, a biometrics candidate and a biometrics template all encrypted using a secure enclave encryption public key;
• receiving, by the remote device, the request, and homomorphically computing the biometrics matching between the biometrics candidate and a biometrics template, outputting encrypted biometrics match result;
• receiving, by a secure enclave, the encrypted request data, and the encrypted biometrics match result, and decrypting them using a secure enclave encryption private key;
• if at least biometric match result positive, generating, by the secure enclave, an ephemeral signing keypair, wherein the secure enclave generates an cryptographic authentication code of the request data with the ephemeral signing private key, and encrypts the cryptographic authentication code of request data along with the ephemeral signing public key attestation using the device encryption public key;
• receiving and decrypting, by the personal device, the signed request data along with the ephemeral signing public key attestation, and extracting the ephemeral signing public key
• verifying, by any party, at least the cryptographic authentication code of the request data; and
• if verification succeeds, biometrics matching is considered as valid by the party.

## Description

### TECHNICAL FIELD

This invention relates to the field of digital wallets and, particularly, to secure and privacy-preserving user authentication through biometrics matching beyond the wallet's secure perimeter.

This invention further capitalizes on advanced cryptographic schemes, such as Homomorphic Encryption, to enable users to be authenticated in controlled environments (thus ensuring procedure integrity) while maintaining the data confidentiality within wallet's perimeter.

### BACKGROUND OF THE INVENTION

An *attribute* refers to any characteristic that is proper to a given person (either natural or legal). The attributes are typically issued by an issuing authority (e.g., governments or institutions), that enable person's authentication (e.g., given name, surname, address, citizenship, birthdate, age, etc.) or proves he/she has certain claims e.g., education qualifications, driver license status, etc. Such personal attributes are usually written on physical credentials, such as an ID card or passport but, with the emergence of online services, and seeking user-friendliness, these attributes tend to be further represented in a digital form and securely stored in applications called *digital wallets.* Then, users can carry these credentials conveniently in their personal devices.

In short, the *issuer* (e.g., still governments or institutions) asserts certain attributes about the wallet's *holder*, thus creating a *credential* containing these claims, and transmits / issues the credential to the holder, which securely stores it in its *wallet.* When the holder wishes to (e.g., selectively) disclose his/her attributes to a *verifier*, it generates a *Presentation* (similar schema than the credentials) that the verifier can validate.

Nevertheless, since wallets are user-centric and the digital credentials can be used e.g., in "unsupervised scenarios" such as authentication to service providers to consume their services, the user sometimes needs to be strongly authenticated to the wallet before being able to use the credentials. This is highly recommended by wallet vendors or standard organisms and, namely, mandated by the European Digital Identity Wallet (EUDI wallet) ecosystem when the device's Level of Assurance (LoA) is intended to be high. This capability is crucial, as it allows relying parties to confidently verify the identity of users they interact with.

In this regard, biometrics matching has risen as the preferred industry's option given its ubiquitous nature and convenience (e.g., vis-a-vis external tokens). That is, the user submits (i.e., gets the personal device storing the wallet to capture) his/her biometrics traits (e.g., face, fingerprint, voice, iris, etc.) and, after some processing (e.g., feature extraction, normalization, etc.), this biometric candidate is matched against a pre-stored template created during the enrollment. If the matching is successful, the user is allowed to use the stored credentials.

Failing to strongly authenticate users can lead to fraud, identity theft and systemic breach of trust so that high LoA devices should be protected against forgery, cloning, and unauthorized access. That's why the Architecture and Reference Framework of the European Digital Identity Wallet, EUDIW, v1.8.0., recommends the use of wallet secure cryptographic devices, WSCD, as tamper-proof elements where to store the keys.

However, only some of the latest mobile devices are currently equipped with embedded secure elements and hence they cannot be considered by default as trusted environments. When deporting sensitive operations outside the mobile device, e.g., to a more secure environment, the problem turns into both:
- privacy, since this external environment will have access to user personal data, and
- binding, since this external environment carries the core verifications, it then needs to make sure that these verifications correlate with the mobile device held by the user.

Therefore, there is a need in the industry to delegate critical verifications to a deported environment without compromising the data confidentiality while ensuring that the verification is bound to the local environment (e.g., the wallet or the user's personal device).

### SUMMARY OF THE INVENTION

The present invention provides a solution for all the aforementioned problems by a method for a personal device to delegate biometrics matching to a remote device in a privacy-preserving manner according to claim 1, a related system according to claim 12, a secure enclave according to claim 13, and a method for a personal device to perform a transaction with a relying party according to claim 14. In dependent claims, preferred embodiments of the invention are defined.

In a first inventive step, the present invention provides a method for a personal device to delegate biometrics matching to a remote device in a privacy-preserving manner. The method comprises the steps of:
- sending, by the personal device, biometrics matching request to the remote device, the request at least comprising request data, a biometrics candidate and a biometrics template all encrypted using a secure enclave encryption public key;
- receiving, by the remote device, the request, and homomorphically computing the biometrics matching between the biometrics candidate and a biometrics template, outputting encrypted biometrics match result;
- receiving, by a secure enclave, the encrypted request data, and the encrypted biometrics match result, and decrypting them using a secure enclave encryption private key;
- if at least biometric match result positive, generating, by the secure enclave, an ephemeral signing keypair, wherein the secure enclave generates a cryptographic authentication code for the request data with the ephemeral signing private key, and encrypts the cryptographic authentication code of request data along with the ephemeral signing public key attestation using the device encryption public key;
- receiving and decrypting, by the personal device, the cryptographic authentication code of request data along with the ephemeral signing public key attestation, extracting the ephemeral signing public key
- verifying, by any party, at least the cryptographic authentication code of the request data; and
- if verification succeeds, biometrics matching is considered as valid by the personal device.

In short, the personal device captures (or gets captured through a securely connected component) a biometrics candidate (e.g., user's selfie picture) and retrieves the pre-stored biometrics template (e.g., user's portrait) created during enrollment. It also generates request data - identifying e.g., the delegation - and encrypts everything so it can be only decrypted by the secure enclave. The personal data sends this encrypted payload to the remote device (e.g., server or back-end services) that, without being able to decrypt the payload (because it lacks the decryption key), is nonetheless able to compute a biometric matching through homomorphic encryption on the encrypted candidate and encrypted template thus generating a, still, encrypted result.

This encrypted result is then passed over to the secure enclave together with the encrypted request data, successfully decrypted, and if the matching result is positive (i.e., the matching criteria was met), the secure enclave generates on-the-fly (or retrieves fresh, unused, keypair from a keypair pool) ephemeral signing keypair (together with the attestation) to generate a cryptographic authentication code for the request data with the ephemeral private key, and encrypt it so it can be only decrypted by the personal device itself.

Then, any party (such as the personal device itself or a relying party) can successfully verify the cryptographic authentication code (e.g., signature) on the request data (thanks to the public key extracted from the received attestation), and thus consider that the biometrics matching was positive.

Encryption under the secure enclave public key ensures the confidentiality of all data (namely biometric data that is deemed sensitive data by many laws). Advantageously, the remote device or server cannot link two requests made by the same device. The use of ephemeral signing keys by the secure enclave ensures forward and backward secrecy as well as has several side-effects in terms of performance - e.g., these keys are destroyed after use not impacting storage.

In general, it is not possible to link the output of two requests beyond the fact that they were generated with the same secure enclave (i.e., through the ephemeral signing public key attestation that would be signed with the secure enclave *static* signing private key). In a preferred embodiment, the secure enclave is a Hardware Security Module (HSM) that serves as root-of-trust in secure systems by providing tamper-resistant hardware environments that protect cryptographic keys and operations within a physical security boundary, ensuring that the most sensitive security functions remain isolated from potential software vulnerabilities and physical attacks.

A plausible more-performant embodiment of the invention is to implement the remote device and the secure enclave using confidential computing but, unlike the HSM option where the root-of-trust is narrow and hence more secure, with confidential computing the full execution stack needs to be unfortunately trustable (e.g., hardware, enclave OS, application, and application provisioning method).

In an alternative embodiment, the secure enclave can be a secure element embedded in the personal device.

Regarding privacy, the present invention does not require to store any biometrics template on servers, hence reducing leak risks. The delegation of the homomorphic-based matching to the secure enclave allows easily changing the biometric algorithm without having any influence on the secure enclave workflow. This allows more flexibility when building the digital wallet application without compromising security. For basic matching algorithms, this architecture also has minimal impact on performance as the most expensive operations (cryptographic ones) are evaluated directly on the secure enclave.

In a preferred embodiment, the remote device computes biometrics matching based on fully homomorphic encryption, FHE. In a preferred embodiment, the FHE-based biometrics matching is face matching relying on Cosine distance and/or iris matching relying on Hamming distance. More particularly, the invention primarily focusses on 1:1 matching.

Despite this is a rapidly evolving technology, today FHE is well-suited for lighter computational algorithms such as those based on "distances", which are exactly the Cosine distance typically used in face matching or the Hamming distance for iris. In FHE scenarios, the representation and processing of the encrypted data can be further optimized, for instance, standardizing vector lengths to simplify calculations. Since many FHE schemes rely heavily on scalar (dot) products between vectors, normalizing the vectors ensures that these fundamental operations can be performed more efficiently. Scalar products are relatively simple computations (multiplying corresponding elements and summing the results), so they're well-suited for homomorphic operations which otherwise tend to be computationally intensive. Luckily, new promising algorithms and optimization techniques are being developed and experimented these days, while computational resources are regularly increasing giving rise in the short/mid-term to industrial-grade solutions relying on other biometrics modalities.

In a particular embodiment, the personal device is configured to compute liveness detection on the biometrics candidate before launching the matching request. As known, lighter versions of liveness algorithms can run on personal devices. Alternatively, if not fully implemented on device, the secure enclave can perform part or all of the liveness techniques or being split among the two: the computationally expensive part computed on device, while the lighter part by the secure enclave.

It is to be noted that, in terms of performance, the present invention is comparable or slightly slower (i.e., ≈ hundred of milliseconds) than conventional "plaintext" matching techniques on server side since the extraction of the template is done on the user's device, and only the matching is done on the server side..

In a preferred embodiment, the personal device hashes the request data before sending it to the remote device.

In a particular embodiment, the personal device binds the request data and the biometrics candidate signing this payload with a device signing private key. The personal device further sends this signed payload encrypted with the secure enclave encryption public key to the secure enclave which, in turn, decrypts it, and verifies the device signature using a device signing public key, and the correct binding between request data and the biometrics candidate. Additionally, the secure enclave further verifies that the biometrics candidate corresponds to the one that was encrypted under the secure enclave encryption public key.

This advantageously ensures that all data is correctly authenticated and bound to authorised and certified devices.

In a particular embodiment, the personal device stores an issuer-vouched attestation comprising the biometrics template, a device encryption public key, and a device signing public key. During the request preparation the personal device also encrypts and sends the attestation to the secure enclave which, in turn, decrypts and extracts the attestation components. Additionally, the secure enclave further verifies that the biometrics template from the attestation corresponds to the one that was encrypted under the secure enclave encryption public key.

In a particular embodiment, the personal device stores a wallet instance comprising at least one holder credential. Alternatively, or additionally, the secure enclave is embodied as a Hardware Security Module.

In a particular embodiment, the party is either the personal device or a relying party that requires device authentication. Preferably, the party is the relying party wishing to access the stored credential(s) in the personal device.

In a particular embodiment, the request data is the parameter *DeviceAuthentication* as defined in ISO/IEC 18013-5:2020(E). This parameter is part of the device retrieval and authentication mechanisms (e.g., as per chapters 9.2.3.4 and 9.3.3.6 of ISO/IEC 18013-5:2020(E)) that ensure secure communication between the mDL and verifying devices.

In short, this DeviceAuthentication parameter serves as a flag that indicates whether device authentication is required during the data exchange process. It has two possible values. When set to TRUE, the personal device must perform device authentication with the verifier before sharing any credential data. This ensures that the verifier is authorized to request the information. When set to FALSE, device authentication is not required for the transaction, which may be acceptable in certain lower-security scenarios.

The DeviceAuthentication parameter works in conjunction with other security mechanisms defined in the standard, such as the encrypted session establishment and data signing protocols, to create a comprehensive security architecture for mobile driving license systems.

In a particular embodiment, the cryptographic authentication code is an asymmetric cryptographic signature such as Elliptic Curve Digital Signature Algorithm (ECDSA).

Alternatively, the cryptographic authentication code is part of a cryptographic key agreement (e.g., between the personal device and a relying party) using the ephemeral signing keypair and part or all of the request data, wherein the ephemeral signing keypair is further used to generate a message authentication code, MAC, on at least part of the request data. That is, MAC(msg, ECDH(keyDevice, KeyVerifier)).

Therefore, instead of using the ephemeral signing private key to sign the request data, in the MAC-related option, this key is used during a key agreement function to derive a MAC key as proposed, for instance, in ISO/IEC 18013-5:2020(E) spec., namely in chapter 9.2.3.5.

In a second inventive aspect, the invention provides a system for a personal device to delegate biometrics matching to a remote device in a privacy-preserving manner. The **system** comprises:
- the personal device, which is configured to
   ∘ send biometrics matching request to the remote device, the request at least comprising request data, a biometrics candidate and a biometrics template all encrypted using a secure enclave encryption public key;
   ∘ receive from a secure enclave, and decrypt, a signed request data along with an ephemeral signature public key attestation, extract the ephemeral signature public key; and
- the remote device, which is configured to:
   ∘ receive a biometrics candidate and a biometrics template,
   ∘ homomorphically compute the biometrics matching between them, outputting encrypted biometrics match result, and
   ∘ send the encrypted biometrics match result to a secure enclave,
- the secure enclave, which configured to:
   ∘ receive the encrypted request data and the encrypted biometrics match result, and decrypt them using a secure enclave encryption private key,
   ∘ if at least biometric match results positive, generate an ephemeral signing keypair,
   ∘ generate a cryptographic authentication code for the request data with the ephemeral signing private key, and encrypts the cryptographic authentication code of request data along with the ephemeral signing public key attestation using the device encryption public key.

The personal device may communicate directly with the secure enclave to perform sensitive operations but, in a preferred embodiment, the personal device communicates with the secure enclave through the authenticated backend service acting as a secure proxy. Therefore, the portable device submits to the remote device the encrypted request data, the encrypted biometrics candidate and the encrypted biometrics template that will be forwarded to the secure enclave after the homomorphic biometric matching computation.

Similarly, the secure enclave sends back to the portable device the encrypted data through the remote device which, lacking the correct decryption key, won't be able to read it.

In a third inventive aspect, the invention provides a secure enclave to be used in the system of the second inventive aspect. Such secure enclave can be e.g., an HSM, and is configured to:
- receive encrypted request data from a personal device, or through a remote device,
- receive encrypted biometrics match result from the remote device,
- decrypt them using a secure enclave encryption private key,
- check at least the biometric match result and, if positive, generate an ephemeral signing keypair and an ephemeral signing public key attestation,
- generate a cryptographic authentication code for the request data using the ephemeral signing private key, and encrypt the cryptographic authentication code of request data along with the ephemeral signing public key attestation using a device encryption public key,
- send the encrypted payload of the cryptographic authentication code of request data along with the ephemeral signing public key attestation to the personal device.

In a fourth inventive aspect, the invention provides a method for a personal device to perform a transaction with a relying party, the method comprising:
- device engaging the personal device and the relying party for secure communication,
- requesting, by the relying party, transaction data to the personal device,
- capturing, by the personal device, biometrics candidate of the user and delegating the biometrics matching to a remote device in a privacy-preserving manner according to any of the embodiments of the first inventive aspect,
- if biometrics matching is valid, sending the requested transaction data to the relying party.

In a particular embodiment, the transaction with the relying party is the disclosure of stored credentials such as identity credentials, payment credentials, unlocking keys, or using car keys.

In other words, not all the credentials in the personal device's wallet are just identity documents to present, and the associated possible actions to be performed with them are exponentially growing. For instance, car key credentials can unlock cars, but also start the engine, prove its ownership, etc. Therefore, throughout the description, a *credential* should be understood as a cryptographically secured digital representation of attributes, entitlements, or capabilities issued by an authority, that can be securely stored in a personal device (namely, in the digital wallet), and can be verified without requiring direct interaction with the issuer at the time of verification. They all serve as trusted digital proxies that allow the holder to prove something about themselves - their identity, their payment authority, their access rights - through a secure digital interaction. A credential according to the invention encompasses: identity-related credentials (e.g., W3C's VCs, ISO mDL) and non-identity-related credentials (e.g., car keys, and wallet-hosted payment cards).

In a preferred embodiment, the personal device stores a wallet instance comprising at least one holder credential with holder attributes or claims formatted according to W3C's Verifiable Credentials Data Model v2.0 spec., and/or ISO/IEC 18013-5 spec.

In a particular embodiment, the secure enclave is a Wallet Secure Cryptographic Device, WSCD, as defined in the Architecture and Reference Framework of the European Digital Identity Wallet, EUDIW, v1.8.0. Preferably, the WSCD is an HSM.

In a preferred embodiment, the secure enclave is a Wallet Secure Cryptographic Device, WSCD, as defined in the implementing act OJ L 2024/2979. That is, "wallet secure cryptographic device" means *a tamper-resistant device that provides an environment that is linked to and used by the wallet secure cryptographic application to protect critical assets and provide cryptographic functions for the secure execution of critical operations.*

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
[Fig. 1] shows an ecosystem for a personal device to delegate biometrics matching to a remote device in a privacy-preserving manner, according to some embodiments of the invention;
[Fig. 2] shows steps of a method for biometric matching according to embodiments of the invention.

### DETAILED DESCRIPTION OF THE INVENTION

For the sake of illustration, the following description will focus on identity wallets, namely on the Digital Identity Wallet ecosystem as defined e.g., in ARF v1.8.0. However, the skilled person in the art shall recognize that the biometrics matching delegated from a personal device to a remote device in a privacy-preserving manner can be used in many other use cases with e.g., slightly different implementations.

The digital wallets in general, and the European one in particular, center around a user-controlled mobile application that securely stores and manages digital identity credentials. The core components include the *wallet instance* itself, *credential issuers* (trusted entities providing credentials), *relying parties* (services accepting credential presentations), *trust service providers* (ensuring security infrastructure), and *trust registries* (maintaining lists of authorized entities).

The ecosystem architecture follows a user-centric approach with three primary interfaces: issuer-wallet interface for credential issuance, wallet-relying party interface for presentation exchange, and the trust infrastructure interface supporting security and validation. This example adheres to elDAS regulation 2.0, implementing strong security measures while preserving user control and privacy.

Credentials in these wallets come in various formats, primarily Verifiable Credentials (VCs) and European Digital Identity attestations (issued as Qualified Electronic Attestations of Attributes, QEAAs). These can be based on standards like ISO/IEC 18013-5 mobile driving license (mDL), or W3C Verifiable Credentials Data Model v2.0 spec.

The credential onboarding process begins with user authentication to both the wallet and the issuer. After mutual authentication, the issuer verifies the user's identity and attributes before securely transferring the credential to the wallet using standardized protocols (beyond the scope of this invention). The wallet then securely stores these credentials, applying cryptographic protection and ensuring they remain under the user's control.

For government-issued identity credentials (e.g., PID), a more rigorous onboarding process may include in-person verification or remote identification with equivalent level of assurance (LoA). This typically leverages existing national eID schemes as trust anchors, with the PID credential binding to the user's wallet instance. "Secondary credentials", such as educational qualifications or payment means, follow similar but potentially streamlined enrollment processes depending on the sensitivity of the information and the LoA required. These may involve sector-specific verification procedures and can be issued by both public and private authorized entities.

For credential presentations, the wallet typically implements selective disclosure allowing users to share only necessary information. The process begins when a relying party requests specific attributes, often through QR codes or deep links. The user reviews this request in their wallet, choosing which credentials to present and which specific attributes to disclose. The Wallet then creates a presentation, which is cryptographically signed to ensure authenticity and integrity. This presentation can include proofs that certain conditions are met (e.g., "over 18") without revealing the actual data.

After user consent, the wallet transmits the credential presentation to the relying party through secure channels which verifies the presentation's authenticity, checks revocation status, and validates the issuer's authority through trust registries. Upon successful verification, the relying party grants access to the requested service while maintaining an audit trail for compliance purposes.

As seen, the entire current ecosystem is built on principles of privacy-by-design, data minimization, and user control, ensuring that wallet holders can securely manage their digital identity in different scenarios while maintaining control over their personal data in accordance with e.g., General Data Protection Regulation (GDPR) and elDAS 2.0 requirements.

In this context, the present invention targets the protection of the signature keys that enable or unlock the use of the wallet's credentials for high LoA situations, especially when the personal device lacks embedded secure elements usable as "wallet secure cryptographic device" (WSCD). In particular, it solves the privacy weaknesses of using HSMs as WSCD.

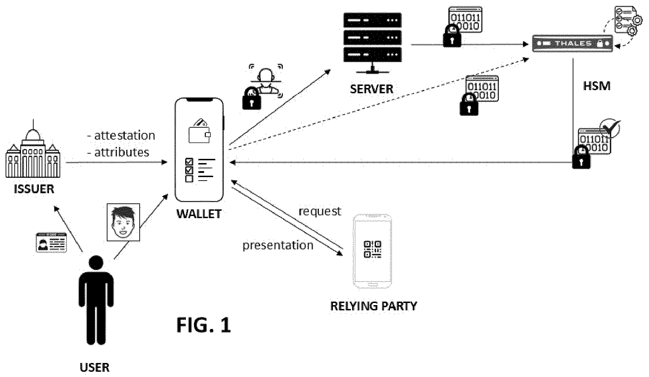

**Figure 1** depicts the full ecosystem according to the present invention. In particular, it comprises an *issuer* (to which users will authenticate in order to get their attributes within their wallets), the *wallet* (as an application installed within the mobile phone), the pair *server-*HSM (for homomorphically computing the biometrics matching, and checking the plaintext results, respectively), and an exemplifying *relying party* (that will request attributes and receive the corresponding presentations).

As mentioned before, the issuer is the entity typically authorized to create and sign digital credentials. According to the invention, during enrollment, the issuer also generates an attestation that binds together the biometrics template with the public keys of the personal device (or the wallet), namely the device signature public key (use for signing purposes) and the device encryption public key (used for encryption/decryption). In some embodiments, though not recommended, the device signing keypair and device encryption keypair can be the same. The issuer operates secure backend systems with cryptographic capabilities to verify user attributes (such as national elD), generate credentials (such as PID), and digitally sign them using their private keys. They may be government authorities (for PIDs), educational institutions, banks, or other organizations with the authority to attest to specific user attributes.

The issuer-wallet interface supports credential issuance through protocols like OpenID for Verifiable Credential Issuance (OIDC4VCI) and/or ISO/IEC 23330-3 for mobile driving licenses (mDoc.). It uses authentication flows such as OpenID Connect and SAML, with transport security provided by Transport Layer Security (TLS) and Hypertext Transfer Protocol Secure (HTTPS). Data is exchanged in formats including W3C Verifiable Credentials, JSON-LD, and JWT/CBOR. Communications follow request-response patterns for credential issuance and revocation status checking.

The wallet, on the other side, is a mobile application that securely stores the user credentials (e.g., PIDs). Technically, it's a cryptographically secured container with capabilities for credential management, cryptographic operations, and secure storage. The wallet generates and controls cryptographic key pairs, implements standardized protocols for credential exchange, manages credential lifecycle, and provides a user interface for consent management. It may employ hardware-backed security features (like secure elements, TPM, or TEEs) to protect sensitive data and keys but this won't impact the present invention.

According to the invention, the wallet establishes further communication with a remote device (i.e., server) running a backend service through mutual TLS connections over HTTPS, where both parties authenticate e.g., using X.509 certificates. The backend service server preferably runs in a secured cloud environment with access controls, intrusion detection, and audit logging. When cryptographic operations are needed (e.g., signing a presentation or decrypting a credential), the wallet needs first to authenticate the user strongly through biometrics. It then creates a signed (hashed) request containing the operation details, and optionally a nonce (i.e., to prevent replay attacks). For exemplifying reasons, the terms personal device and wallet can be exchanged throughout these examples when talking about the wallet's functionalities since the wallet's actual implementation can greatly vary.

As mentioned, the wallet advantageously shares within this request further encrypted data, namely encrypted biometrics candidate and template, that was encrypted by the wallet using the HSM keys. Since this server doesn't have access to these keys, its contribution will be limited to homomorphically compute the biometrics matching algorithm that can be based, for instance, on Cosine distance (for face use case) or Hamming distance (for iris). The backend validates this request, checks authorizations, homomorphically computes the biometrics matching and forwards the encrypted biometrics matching result (together with the rest of the encrypted data) to the HSM.

The wallet may communicate directly with the secure enclave (e.g., an HSM) to perform sensitive operations but, in a preferred embodiment, the wallet communicates with the HSM through the authenticated backend service acting as a secure proxy. The backend service may maintain then a persistent, authenticated connection to the HSM using dedicated protocols like PKCS#11, CryptoAPI, or vendor-specific interfaces with strict access control lists.

The HSM, typically FIPS 140-2 Level 3 or higher certified, performs the requested cryptographic operation (payload decryption, data validation and verification, ephemeral key generation, and further signing and encryption) without ever exposing the private keys outside its tamper-resistant boundary. It then returns the operation result directly to the wallet application, or through the backend service, which then relays it back to the wallet application.

Finally, coming back to the ecosystem of claim 1, the relying party is a service provider that requests and verifies credentials from user wallet. They implement verification capabilities to validate credential presentations, check signatures, verify revocation status, and process selective disclosures. They interpret credential schemas, validate trust chains back to trusted roots, and integrate credential verification into their authentication or service flows.

As mentioned before, the relying party initiating the credential request uses a DeviceAuthentication parameter that essentially determines the authentication requirements for the subsequent session. If set to TRUE, the protocol mandates that device authentication must occur before any credential data exchange. Upon receiving this request, the personal device checks the DeviceAuthentication value and, as it is set TRUE, the device initiates the device authentication that involves a challenge-response mechanism where the relying party presents a challenge, and the device must respond with a cryptographically valid signature. This step verifies that both the relying party is authorized to request information and that the device is legitimate. If DeviceAuthentication is FALSE, the protocol allows the encrypted session to be established without this additional authentication step, though other security measures like data element signing would still be in place.

The wallet-relaying party interface facilitates presentation exchange using protocols like OpenID for Verifiable Presentations (OIDC4VP), ISO/IEC 23220-4 and/or ISO/IEC 18013-5. It employs cryptographic challenge-response mechanisms for authentication and uses QR codes or deep links to initiate presentation requests. Transport methods include both online (e.g., HTTPS) and offline (e.g., Bluetooth, NFC, QR) communication channels. Presentations are formatted as Verifiable Presentations or Selective Disclosure JWTs, with request-response patterns for presentation requests and submissions.

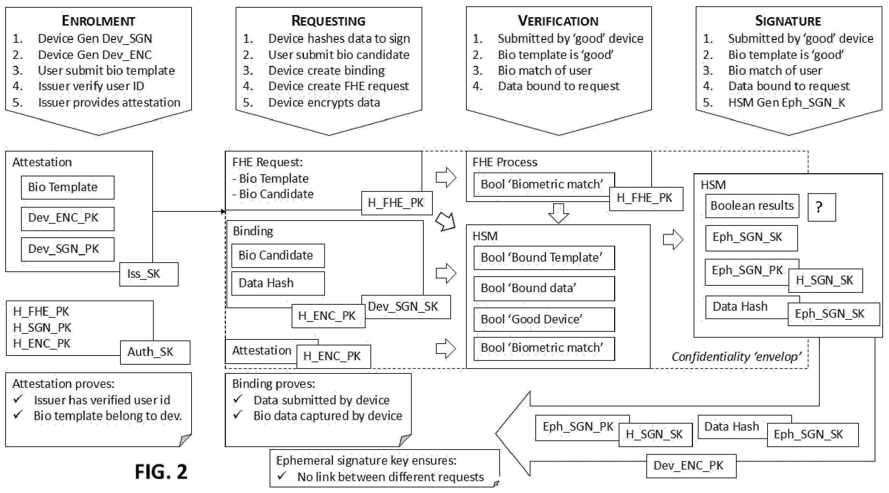

In figure 2, it is disclosed the pre-requirements and mechanisms for delegating the biometric matching to the backend service of figure 1.

Before the user enrolment, the issuer (or a delegated certification authority) generates a signature keypair Iss_SGN with a public key Iss_SGN_PK and a private key Iss_SGN_SK. The secure enclave, exemplified herein by the HSM, also generates
- an HSM signature keypair H_SGN with the public key H_SGN_PK and the private key H_SGN_SK,
- an HSM encryption key pair H_ENC with the public key H_ENC_PK and the private key H_ENC_SK,
- a FHE key pair H_FHE with the public key H_FHE_PK and the private key H_FHE_SK.

The certification authority, or the above-mentioned issuer itself, provides an HSM attestation, which contains at least H_SGN_PK and information about the certification authority as usual, both signed by Auth_SGN. More particularly, the HSM attestation contains H_SGN_PK, H_FHE_PK, and H_ENC_PK together with the CA details.

After these pre-requisites, during user enrolment, the personal device (or the wallet itself) generates a personal device signature key pair denoted Dev_SGN and a personal device encryption key pair denoted Dev_ENC. The user then submits, through the personal device to the issuer, one or more biometrics capture(s) that will form the biometrics template (i.e., after any necessary biometrics-specific post-processing such as normalization, cropping, feature extractions, minutae, etc.). This biometrics template will be used for as the reference for subsequent authentications through biometrics matching.

Once the issuer verifies the user identity (e.g., through elD as in figure 1), it provides the wallet with a personal device attestation, which mainly establishes a user binding by linking Dev_SGN and Dev_ENC with the biometrics template. In a particular embodiment, this personal device attestation is formatted as a certificate holding Dev_SGN_PK, Dev_ENC_PK, the biometrics template, and issuer details; all of this signed by Iss_SGN.

To finish with the enrolment, the personal device receives the HSM attestation, containing at least the HSM public keys H_ENC_PK, H_FHE_PK (e.g., actually signed by the HSM using H_SGN to improve integrity and security), and verifies the associated signatures.

The user is now ready to strongly authenticate him/herself.

Therefore, during a request by the user, the personal device first hashes request data (e.g., DeviceAuthentication parameter received from the relying party) to be signed, and received from user (e.g., captures and processes) the biometrics candidate. The personal device creates a binding by signing, with Dev_SGN_SK, the data hash and the biometric candidate resulting in a signature SIG.

The personal device generates the following ciphertexts:
- an encryption C1 of the biometric template using H_FHE_PK,
- an encryption C2 of the biometric candidate using H_FHE_PK,
- an encryption C3 of the request data hash, the biometric candidate, SIG, and its attestation, again using H_ENC_PK.

And the personal device sends these ciphertexts C1, C2, and C3 to the remote server which, together with the HSM, proceed with the verification phase. These ciphertexts C1, C2, and C3 can be either considered as separate ones, or being grouped (e.g., concatenated) and then all encrypted together; provided that the remote servers can successfully perform the homomorphic computation.

During verification, the server homomorphically computes the pre-defined biometric matching between the (encrypted) biometrics template C1 and biometrics candidate C2 resulting in the ciphertext C4 (still under H_FHE_PK) of a Boolean corresponding to the biometrics match result. Without knowing anything about these ciphertexts, the server transmits C1, C2, C3, and C4 to the HSM.

The HSM decrypts C1, C2, C3, and C4, and checks, at least, the following:
- that the device attestation valid, relying on Iss_SGN_PK,
- that the SIG signature valid, relying on Dev_SGN_PK extracted e.g., from the device attestation,
- that the plaintext corresponding to C1 equals to the biometric template from the device attestation
- that the biometric candidate bound by SIG equals to the plaintext corresponding to C2
- that the biometrics matching succeeded by checking the decrypted result.

These all steps ensure that the request was indeed submitted by a certified personal device (or wallet instance), that the submitted biometric candidate is genuine and the matching succeeded, and that the request data and personal device encryption key are bound to the personal device.

If all these checks are valid, the HSM triggers the generation of the cryptographic authentication code for the request data. Throughout this example, the cryptographic authentication code is an asymmetric cryptographic signature and hence the HSM triggers the signature phase where it generates on-the-fly fresh or ephemeral signature keypair Eph_SGN (with Eph_SGN_PK and Eph_SGN_SK) and a attestation for Eph_SGN_PK by signing it with its own static signature key H_SGN_SK.

At the end of the verification step, the HSM signs the data hash with Eph_SGN_SK outputting a final ciphertext C5, encrypted using Dev_Enc_PK. This ciphertext comprises, at least, the ephemeral public key Eph_SGN_PK, its associated attestation, and the signature of the (hashed) request data with Eph_SGN.

As mentioned, the HSM may return all these values to the server which will forward them back to the wallet. The wallet will decrypt C5, extracts the Eph_SGN_PK and checks its validity with the attestation, checks the signature on the returned (hashed) request data, and verifies the content of the returned hashed data. If everything matches, it considers that the biometrics matching was successful and hence assumes that the user, wishing to use or access any of the stored credential(s), was strongly authenticated.

Similarly, the verification of the cryptographic authentication code of the request data (e.g., signature on the DeviceAuthentication parameter) can be performed by the relying party that initiated the session with the personal device.

## Claims

1. A method for a personal device to delegate biometrics matching to a remote device in a privacy-preserving manner, the method comprising the steps of:
• sending, by the personal device, biometrics matching request to the remote device, the request at least comprising request data, a biometrics candidate and a biometrics template all encrypted using a secure enclave encryption public key;
• receiving, by the remote device, the request, and homomorphically computing the biometrics matching between the biometrics candidate and a biometrics template, outputting encrypted biometrics match result;
• receiving, by a secure enclave, the encrypted request data, and the encrypted biometrics match result, and decrypting them using a secure enclave encryption private key;
• if at least biometric match result positive, generating, by the secure enclave, an ephemeral signing keypair, wherein the secure enclave generates a cryptographic authentication code for the request data with the ephemeral signing private key, generates an attestation for the ephemeral signing private key using its own attestation public key and encrypts the signed request data along with the ephemeral signing public key attestation using the device encryption public key;
• receiving and decrypting, by the personal device, the cryptographic authentication code of the request data along with the ephemeral signing public key attestation, extracting the ephemeral signing public key; and
• verifying, by any party, at least the cryptographic authentication code of the request data; and
• if verification succeeds, biometrics matching is considered as valid by such party.

2. The method according to claim 1, wherein the personal device hashes the request data before sending it to the remote device.

3. The method according to any of claims 1 or 2, wherein the remote device computes biometrics matching based on fully homomorphic encryption, FHE.

4. The method according to claim 3, wherein the FHE-based biometrics matching is face matching relying on Cosine distance and/or iris matching relying on Hamming distance.

5. The method according to any of claims 1 to 4, wherein the personal device binds the request data and the biometrics candidate signing this payload with a device signing private key, so that the personal device further sends this signed payload encrypted with the secure enclave encryption public key to the secure enclave which, in turn, decrypts it, and verifies the device signature using a device signing public key, and the correct binding between request data and the biometrics candidate.

6. **The** method according to any of claims 1 to 5, wherein the personal device stores an issuer-vouched attestation comprising the biometrics template, a device encryption public key, and a device signing public key; so that during the request preparation the personal device also encrypts and sends the attestation to the secure enclave which, in turn, decrypts and extracts the attestation components.

7. **The** method according to any of claims 1 to 6, wherein the personal device stores a wallet instance comprising at least one holder credential, and/or the secure enclave is a Hardware Security Module.

8. **The** method according to any of claims 1 to 7, wherein the party is either the personal device or a relying party that requires device authentication.

9. **The** method according to claim 8, wherein the request data is the parameter DeviceAuthentication as defined in ISO/IEC 18013-5:2020(E).

10. **The** method according to any of the claims 1 to 9, wherein the cryptographic authentication code is an asymmetric cryptographic signature.

11. **The** method according to any of the claims 1 to 9, wherein the cryptographic authentication code is part of a cryptographic key agreement using the ephemeral signing keypair and part or all of the request data, wherein the ephemeral signing keypair is further used to generate a message authentication code, MAC, on at least part of the request data.

12. A system for a personal device to delegate biometrics matching to a remote device in a privacy-preserving manner, the system comprising:
• the personal device, which is configured to
∘ send biometrics matching request to the remote device, the request at least comprising request data, a biometrics candidate and a biometrics template all encrypted using a secure enclave encryption public key;
∘ receive from a secure enclave, and decrypt, a signed request data along with an ephemeral signature public key attestation, and extract the ephemeral signature public key; and
• the remote device, which is configured to:
∘ receive a biometrics candidate and a biometrics template,
∘ homomorphically compute the biometrics matching between them, outputting encrypted biometrics match result, and
∘ send the encrypted biometrics match result to a secure enclave,
• the secure enclave, which configured to:
∘ receive the encrypted request data, and the encrypted biometrics match result, and decrypt them using a secure enclave encryption private key,
∘ if at least biometric match result positive, generate an ephemeral signing keypair,
∘ generate a cryptographic authentication code for the request data with the ephemeral signing private key, and encrypts the cryptographic authentication code of request data along with the ephemeral signing public key attestation using the device encryption public key.

13. A secure enclave to be used in the system of claim 12, such as an HSM, that is configured to:
• receive encrypted request data from a personal device, or through a remote device,
• receive encrypted biometrics match result from the remote device,
• decrypt them using a secure enclave encryption private key,
• check at least the biometric match result and, if positive, generate an ephemeral signing keypair and an ephemeral signing public key attestation,
• generate a cryptographic authentication code for the request data using the ephemeral signature private key, and encrypt the cryptographic authentication code of request data along with the ephemeral signature public key attestation using a device encryption public key,
• send the encrypted payload of the cryptographic authentication code of request data along with the ephemeral signature public key attestation to the personal device.

14. A method for a personal device to perform a transaction with a relying party, the method comprising:
• device engaging the personal device and the relying party for secure communication,
• requesting, by the relying party, transaction data to the personal device,
• capturing, by the personal device, biometrics candidate of the user and delegating the biometrics matching to a remote device in a privacy-preserving manner according to any of claims 1 to 11,
• if biometrics matching is valid, sending the requested transaction data to the relying party.

15. The method according to claim 14, wherein the transaction with the relying party is the disclosure of stored credentials such as identity credentials, payment credentials, unlocking keys, or using car keys.

16. The method according to any of claims 14 or 15, wherein personal device stores a wallet instance comprising at least one holder credential with holder attributes or claims formatted according to W3C's Verifiable Credentials Data Model v2.0 spec., and/or ISO/IEC 18013-5 spec.

17. The method according to claim 16, wherein the secure enclave is a Wallet Secure Cryptographic Device, WSCD, as defined in the implementing act OJ L 2024/2979.
